# EUROPÄISCHE PATENTANMELDUNG

(11) **EP 2 072 217 A1**
(43) Veröffentlichungstag der Anmeldung: **24.06.2009**
(21) Anmeldenummer: 08403002.2
(22) Anmeldetag: 12.12.2008
(51) Int. Cl.: B29C 47/10, D01G 1/04, B29B 11/16, B29C 31/04, B29C 47/40

(54) **Verfahren zur Herstellung von agglomeratfreien natur- und synthesefaserverstärkten Plastifikaten und thermoplastischen Halbzeugen über Direktverarbeitung von Endlosfasern, langfaserverstärkte Halbzeuge daraus sowie die Verwendung dieser**

(30) Priorität: 18.12.2007 DE 102007061620
(71) Anmelder: Thüringisches Institut Für Textil- Und Kunststoff- Forschung E.V., 07407 Rudolstadt (DE)
(72) Erfinder: Gunkel, Holger, 07407 Rudolstadt (DE); Reinemann, Stefan, 07407 Rudolstadt (DE)
(74) Vertreter: Wagner, Gerd

(57) **Zusammenfassung**

Die Erfindung betrifft ein Verfahren zur Herstellung von Verbundwerkstoffen (Plastifikaten) aus einer thermoplastischen Matrix und Endlosverstärkungsfasern mit Hilfe eines Extruders (8), bei dem endlose Faserstränge (2) aus synthetischen und/oder natürlichen Fasern in Form von Filament, Faserband, -bündel oder -kabel zu Stapelfasern geschnitten werden, diese über einen Schneckenförderer in den Extruder einlaufen und dort mit dem geschmolzenen thermoplastischen Matrixmaterial imprägniert und vermischt werden.

Die Faserstränge werden vermittels einer Luftströmung transportiert und geöffnet, wobei die mit Hilfe einer Schneidvorrichtung (5) eingekürzten Einzelfasern über den Schneckenförderer mit Ansaugvorrichtung (6) einem Extruder zugeführt werden, der als Doppelschneckenextruder (8) ausgebildet ist.

Durch dieses Verfahren können Compounds in Form von Granulaten, Profilen, Platten oder anderen Halbzeugen mit hohem Anteil an langen Fasern und einer sehr gleichmäßigen Verteilung hergestellt werden, welche sich durch hohe Bruchfestigkeit bei den aus diesen Compounds hergestellten Fertigteilen auszeichnen und durch günstige Herstellungs- und Fertigungskosten gekennzeichnet sind.

## Beschreibung

Gegenstand der Erfindung ist ein kontinuierliches Verfahren zur Herstellung von Faserverbundwerkstoffen aus einer thermoplastischen Matrix und Natur- und/oder Synthesefasern mit Hilfe eines Doppelschneckenextruders, bei dem die faserverstärkenden Komponenten in ungekürzter Form als Filament, Roving, Faserband, -bündel oder - kabel vorliegen und diese in einem kontinuierlichen Prozess dosiert, geschnitten, geöffnet dem Extruder zugeführt und in die Matrix eingearbeitet werden.

Durch dieses Verfahren können Compounds in Form von Granulaten,

Profilen, Platten oder anderen Halbzeugen mit hohem Anteil an langen Fasern und einer sehr gleichmäßigen Verteilung hergestellt werden, welche sich durch hohe Bruchfestigkeit bei den aus diesen Compounds hergestellten Fertigteilen auszeichnen und durch günstige Herstellungs- und Fertigungskosten gekennzeichnet sind.

### [Stand der Technik]

Im Gegensatz zu den vielfältig realisierten bzw. technisch bekannten Lösungen zum Einsatz von organischen Polymerfasern zur Verstärkung von Reaktivharzsystemen werden thermoplastische Kunststoffe weiterhin vorrangig mit Glasfasern verstärkt.

Eine breite Anwendung findet die Compoundierung, bei denen geschnittene Fasern mit einer mittleren Faserlänge von 1 bis 10 mm einem Extruder mittels einer sogenannten Seitenbeschickung zugeführt werden.

Diese Fasern werden beim Einmischen in den Kunststoff auf Grund ihrer Sprödigkeit zu kurzen Stücken von 0,1 bis 0,8mm Länge zerbrochen. Größere Faserlängen können erreicht werden, wenn das Verstärkungsmaterial in Form von Fasersträngen, sogenannten Rovings direkt durch die Extruderschnecke eingezogen wird (EP0541441) und eine schonende Einarbeitung bei Vermeidung größerer Scherwirkung im Extrusionsraum erfolgt. Mehrere bereits vorgeschlagene Verfahren beinhalten Lösungen, bei denen die Fasern schon vor der Extrusion mit der Kunststoffmatrix imprägniert werden.

Während in DE19860550 die Endlosfasern durch ein Benetzungswalzenpaar geführt werden, erfolgt die Imprägnierung in DE19847796 mit Hilfe einer zusätzlichen Extruderschnecke. In DE4016784 ist ein spezieller Extruder zum Zerschneiden von Endlosglasfasern und Vermischen mit der Thermoplastschmelze beschrieben, der so konstruiert ist, dass ein Teil der Thermoplastschmelze in einen S-förmigen Imprägnierkanal geführt wird, dort die Fasern benetzt und dann wieder mit dem Hauptstrom der Schmelze vereinigt wird. Das in EP0416859 vorgestellt Verfahren kombiniert ebenfalls mehrere Extruder und benutzt zur Einkürzung der Endlosfasern eine Schneidvorrichtung.

Auch die in DE 202007005010 beschriebene Vorrichtung mit Beschichtungseinheiten und die in DE19523490 und DE19530020 vorgestellten Verfahren mit Imprägnierkanälen und Tränkwerkzeug sind hauptsächlich auf steife Fasern ausgerichtet, die stark scherempfindlich sind und durch herkömmliche Extrusion zu sehr eingekürzt werden.

Die oben aufgeführten Vorschläge sind auf den Einsatz von Glasfasern ausgerichtet, bieten aber keine Lösung für die Verstärkung mit synthetischen und Naturfasern. Deren Riesel- und

Verarbeitungsverhalten unterscheiden sich schon aufgrund ihrer anderen physikalischen Eigenschaften völlig von denen der Glasfasern. So sind für die meisten Synthese- und Naturfasern eine geringe Dichte, schlechte Rieseleigenschaft, biegeweiches Verhalten, begrenzte thermische Stabilität charakteristische Merkmale. Ferner neigen diese Fasern beim Transport zur Agglomeration.

Es bestehen weiterhin die Nachteile, dass aufwendige Apparate mit komplizierter Bedienung erforderlich sind und die exakte Mengensteuerung der Verbundkomponenten nur schwer sicherzustellen ist.

In DE10059461 wird ein Verfahren beschrieben, das für ein breites Spektrum an Fasermaterialien anwendbar ist, sich aber auf den Einsatz von Faservliesen oder Fasermatten beschränkt, welche gleichzeitig mit der flüssigen Kunststoffschmelze über eine schlitzförmige Öffnung in den Plastifizierextruder eingezogen werden. Die notwendige textile Vorbereitung der Verstärkungsfasern zu Vliesen oder Matten macht das Verfahren sehr kostenintensiv.

Auch die in EP1099525 und DE102005043867 vorgeschlagenen Modifizierungen von Schneckenförderern gewährleisten nicht den erforderlichen, definiert gleichmäßigen Fasergehalt mit ausreichender Vereinzelung und Imprägnierung der Fasern. Die Vorrichtungen und Verfahren bieten nur unzureichende Möglichkeiten der Mengensteuerung und führen bei biegeweichen Natur- und

Synthesefasern zu unerwünschter Verschlingung und Kompaktierung.

Eine schon länger etablierte Methode zur Faserverstärkung von thermoplastischen Kunststoffen, bei der auch Polymerfasern zum Einsatz kommen, ist das Pultrusionsverfahren. Grundlage dieses und wie auch des in DE 9302401 vorgestellten Verfahrens ist der kontinuierliche Einzug von Verstärkungsfasersträngen in ein Werkzeug unter gleichzeitiger Zuführung von geschmolzenem Matrixmaterial. Diese Varianten liefern Plastifikate mit stark zur Längsachse ausgerichteten Verstärkungsfasern. Direkt geformte Profile zeigen oft unzureichende Verstärkungswirkung hinsichtlich Verbiegungs- und

Torsionskräften. Die Umsetzung erfordert außerdem hohen technischen Aufwand und ermöglicht nur geringe Produktivitäten.

Ebenso sind die in WO0058064 und DE19756126 beschriebenen Methoden zur Langfaserverstärkung, die thermoplastische Matrix in faserförmiger Aufmachung benötigen, als Herstellungsverfahren wenig rentabel.

Die kontinuierliche Zuführung von polymeren Kurzfasern mit Längen von 3-10mm in den Extrusionsprozess gestaltet sich auf Grund der geringen Dichte und der schlechten Rieselfähigkeit der meisten Synthese- und Naturfasern äußerst schwierig. Aufgrund starker Abhängigkeit der Dichte einer derartigen Faserschüttung vom Öffnungsgrad und äußeren Kräften, wie beispielsweise Gewichtskraft bei unterschiedlichen Schütthöhen, funktionieren herkömmliche volumetrische und gravimetrische Dosiereinrichtungen nur mit unzureichender Genauigkeit. Für die agglomeratfreie und gleichmäßige Dosierung und Aufgabe derartiger Fasern besteht bisher keine zufriedenstellende technische Lösung.

Auch die in DE19822051 und JP61247636 vorgestellten Verfahren zur Dosierung schlecht rieselfähiger fasriger Materialien in kunstoff-und betonverarbeitende Einrichtungen gewährleisten nicht die notwendige Dosiergenauigkeit und können auch das Kompaktieren und

Verfilzen der Fasern nicht verhindern.

Das vollständige Auflösen der Faseragglomerate in Kunststoffschmelzen wird anschließend nur durch sehr hohe Scherwirkung erzielt, die andererseits ungewollte starke Faserschädigung verursacht. Bei Lieferung in gepressten Ballen sind außerdem zusätzliche Einrichtungen zum Öffnen und Transport der Fasern notwendig. Das in DE10214654 dargestellte Verfahren zur Herstellung natur- und/oder synthesefaserverstärkter Compounds mittels Doppelschneckenextruder nutzt ebenfalls dieses Dosierverfahren. Es ist auf den Einsatz von bereits geschnittenen Fasern beschränkt und beinhaltet keine

Lösungsansätze, die die aufgezeigten Mängel beseitigen.

Ebenfalls ist das in DE1454786 vorgestellte und in DE29906250 für weitere Anwendungen empfohlene Verfahren, welche unter anderem das Schneiden von Endlosfasern in Faserabschnitte direkt vor ihrer Zuführung zur Verarbeitungsmaschine beinhaltet, nicht in der beanspruchten Form für Synthese- und Naturfasern geeignet. Die Fasern werden unzureichend vereinzelt und können aufgrund des schlechten Rieselverhaltens nicht in offenen Gehäusen durch die

Extruderschnecken eingezogen werden.

Für das in DE4330860 vorgestellte Halbzeug wird ebenfalls nur die

Verstärkung mit Glasmatten und -fasern beansprucht.

### [Aufgabe der Erfindung]

Der Erfindung liegt die Aufgabe zugrunde, ein wirtschaftliches Verfahren zur Herstellung von faserverstärkten thermoplastischen Compounds zu entwickeln, das die genannten Nachteile vermeidet, den Einsatz ungeschnittener Natur- und Synthesefasern erlaubt und durch einfache Verfahrensschritte gekennzeichnet ist. Das Verfahren soll sich weiterhin dadurch auszeichnen, dass übliche Extruder und

Zusatzeinrichtungen zum Einsatz kommen können und Compounds hergestellt werden, die in Verarbeitungsschritten wie Extrusion, Spritzguss, Pressen, Kalandrieren bzw. Thermoformen zu Produkten mit hoher mechanischer Festigkeit, Steifigkeit, Schlagzähigkeit sowie Splitterfreiheit bei Bruch bei geringer Werkstoffdichte führen.

Als Matrix sollen vor allem thermoplastische Polymere zur Anwendung kommen. Als Verstärkungsfasern sind Natur- oder auch Synthesefasern vorgesehen.

Erfindungsgemäß löst die Aufgabe ein Verfahren zur Herstellung von Plastifikaten aus einer thermoplastischen Matrix und Endlosverstärkungsfasern, bei dem endlose Faserstränge aus Natur- und/oder Synthesefasern in Form von Filamenten, Faserband, -bündel oder - kabel zu Stapelfasern geschnitten und über einen Schneckenförderer in einen Extruder einlaufen und dort mit dem geschmolzenen

Matrixmaterial imprägniert und vermischt und diese Komponenten so zu einem Compound zusammengefügt werden, das wiederum zu einem Granulat verarbeitet oder auch direkt sich anschließenden Verarbeitungsstufen zugeführt wird, welches dadurch gekennzeichnet ist, dass Faserstränge mittels einer Luftströmung transportiert und geöffnet werden und die mittels einer Schneidvorrichtung eingekürzten Einzelfasern über den Schneckenförderer mit Ansaugvorrichtung dem Extruder zugeführt werden.

Erfindungsgemäß können als Matrix thermoplastische Polymere, vorzugsweise Polyolefine, niedrigschmelzende Polyamide, ABS, TPO,

TPE sowie schmelzbare, aus natürlichen Ressourcen gewonnene Polymere verwendet werden.

Als Verstärkungsfasern kommen in bevorzugter Ausführungsform der Erfindung Acryl-, Polyester-, Polyamid-, cellulosische Chemie-,

Flachs-, Hanf-, Sisal- und Jutefasern zur Anwendung.

Durch das erreichte hohe Aspektverhältnis der Fasern verbunden mit einer homogenen Verteilung in der Matrix sind überdurchschnittliche Eigenschaften der natur- und synthesefaserverstärkten Kunststoffe erzielbar, die in vielen Fällen die Substitution der Glasfaserverstärkung und der damit verbundenen Nachteile gestatten oder einen kostengünstigen Ersatz hochpreisiger Materialien ermöglichen. Ein geringes Materialgewicht und deutlich reduzierte Splittergefahr bei Bruch unterstützen vor allem die Eignung für den Automobil- und Transportbereich.

Weitere vorteilhafte Merkmale der Erfindung sind der Gegenstand von mehreren Unteransprüchen.

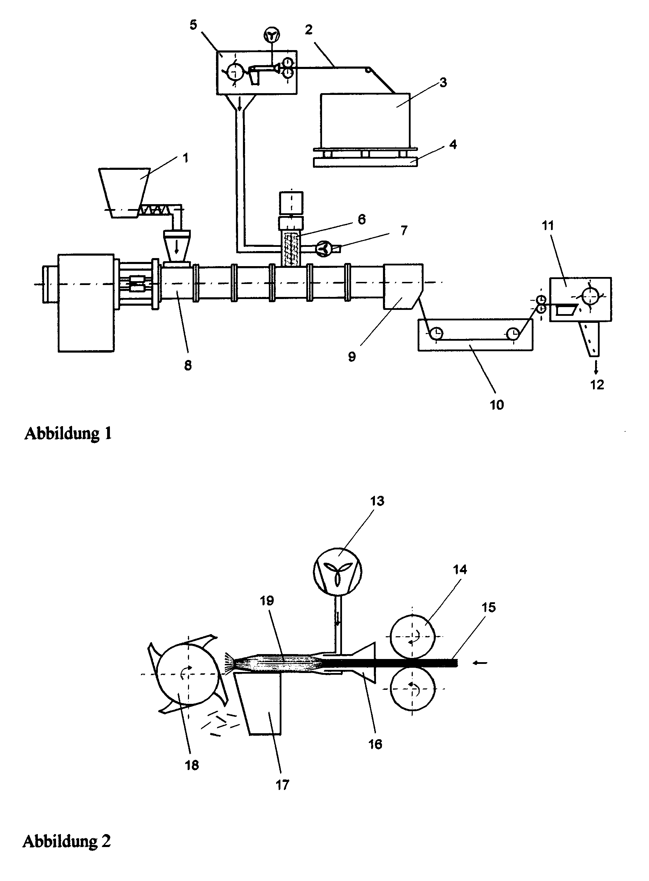

Die Abbildung 1 zeigt eine Übersicht der Anlage zur Durchführung des Verfahrens, einschließlich des als Doppelschneckenextruders (8) mit einem Spritzkopf (9) ausgebildeten Plastifizierextruders sowie der Schneid- und Zuführeinrichtung für das Fasermaterial.

Das Dosieren der Verstärkungskomponente erfolgt durch Zuführung von endlosem Fasermaterial (2) in Form von Filamenten, Rovings, Faserbändern, -bündeln oder -kabeln über ein Einzugswalzenpaar (14) zu einer Schneidmaschine (5), wo durch rotierende Messer (18) Fasern bestimmter Länge erzeugt werden.

Die Dosiermenge an Fasern ist durch die Kabelstärke und die Einzugsgeschwindigkeit bestimmt. Über eine kontinuierliche Gewichtsermittlung (4) einer Faservorlage (3) und Veränderung der

Walzengeschwindigkeit des Kabeleinzugs ist eine gravimetrische Dosierregelung realisierbar.

Das Faserkabel zwischen Einzugswerk (14) und Schneidmessern (17, 18) wird mit besonderem Vorteil durch ein mit Luft durchströmtes Rohr (19) geführt(Abbildung 2). Durch eine Transvektordüse (16) wird dazu eine starke parallele Luftströmung erzeugt, welche einerseits den gesicherten Transport und anderseits eine Öffnung des Faserstranges ermöglicht. Die Luftströmung bewirkt durch ein Auffächern vorrangig am Ausgang des Rohres eine optimale Separierung des Stranges in einzelne Fasern. Die Vereinzelung der Fasern ist eine wesentliche Voraussetzung für die schonende gleichmäßige agglomeratfreie Verteilung im Verbundwerkstoff.

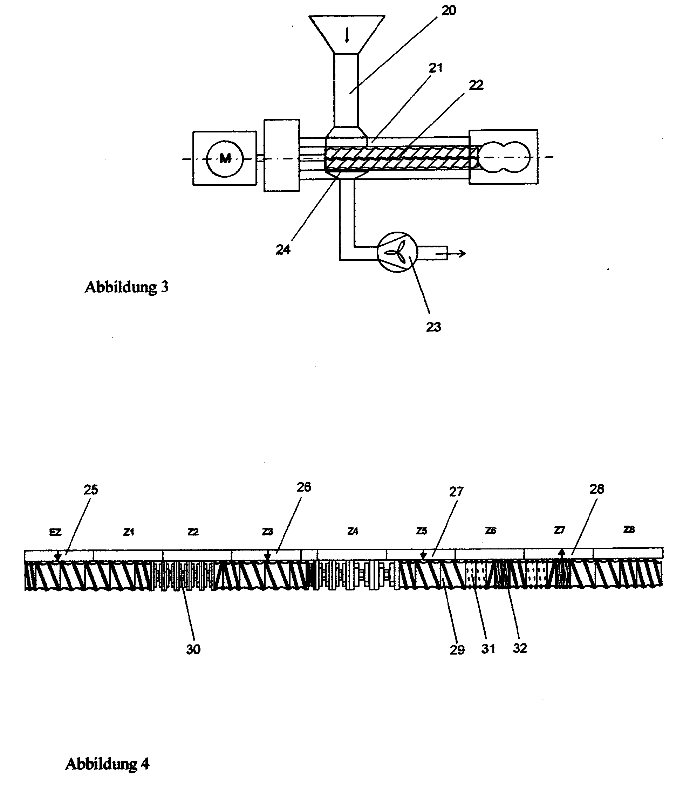

Das geschnittene Fasergut gelangt über einen Fallschacht (20) in einen Schneckenförderer (21), welcher seitlich am Verfahrensteil des Extruders angeflanscht ist. Eine vorteilhafte Ausführung der Fördereinrichtung ist durch die Verwendung von nebeneinanderliegenden zweigängigen Konkavschnecken (22) mit gleichen Drehrichtungen und einer zusätzlichen Ansaugvorrichtung (Abb. 3) entsprechend DE 19754409 gegeben. Die in DE10201869 hinzugefügten Anlagenteile, wie Rührwerk und Reinigungsvorrichtung sind für das erfindungsgemäße Verfahren nicht notwendig.

Die mittels eines Gebläses (23) aus der Schneidmaschine angesaugte Luft durchströmt den rohrförmigen Fallschacht (20) und das Gehäuse des Schneckenförderers (21) und bewirkt dadurch ein Absaugen der Faser aus der Schneidmaschine und ein Ziehen in die Schneckengänge der Förderschnecken (22). Es werden dadurch Knäuel- und

Brückenbildung vermieden, so dass auch größere Mengen an Fasermaterial gleichmäßig in den Extruder eingespeist werden können. Die Compoundierung kann dadurch auch bei leichten und schlecht rieselfähigen Fasern mit großen Durchsätzen und hohen Füllgraden erfolgen.

Die geschnittenen und gut geöffneten Fasern werden in die Förderaufgabezone (27) des Extruders eingeführt, in dem die Matrix bereits aufgeschmolzen ist. Im Extrusionsraum erfolgen die Benetzung und Vermischung mit dem fließfähigen Kunststoff. Für eine schonende Verarbeitung der Fasern ist es vorteilhaft, Matrixmaterialien mit geringeren Schmelzeviskositäten einzusetzen. Es wurde herausgefunden, dass bei Polypropylen der Schmelzindexbereich von 20 - 150 g/10min (MFI bei 230°C, 2,16 kg) besonders geeignet ist. Es besteht die Möglichkeit, mit einer Seitenbeschickung (26) gleichzeitig weitere Verstärkungsfasern und Zusatzstoffe einzuspeisen.

Neben einer geeigneten Schneckenkonfiguration sind vor allem kurze Extrusionswege, niedrige Extruderschneckendrehzahl und geringer Axialdruck ausschlaggebend für die Erhaltung maximaler Faserlängen. Eine vorteilhafte Ausführung ist durch die Kombination von herkömmlichen Schneckenförderelementen (29) mit Zahnmischelementen (32), wie sie aus EP0537450 bekannt sind, und

Schneckenmischelementen (31) gegeben. Die in Abbildung 4 gezeigte Schneckenkonfiguration bietet eine schonende Behandlung von Kunststoff und Fasern und gewährleistet ein optimales Verhältnis von erreichbaren Faserlängen und guter Verteilung und Imprägnierung der Fasern in der Matrix. Unter Nutzung des vorgestellten Verfahrens gelingt es, verhältnismäßig lange Faserabschnitte im Extrusionsstrang einzustellen. Während bei der Herstellung von Granulaten mit herkömmlichen Spritzköpfen die mittlere Faserlänge auf 1 - 5 mm beschränkt ist, können bei größeren Extrudertypen und

Düsenquerschnitten weitaus größere Faserlängen realisiert werden.

Bei Anwendung des erfindungsgemäßen Verfahrens im Rahmen der Inlineextrusion von synthesefaserverstärkten Strängen, Platten, Rohren und anderen Profilen, sowie der Technologie der Direktverarbeitung kann die durchschnittliche Länge der Faserabschnitte im Compound 4 - 20 mm betragen. Durch die Möglichkeit der Veränderung der Schnittlänge der zugeführten Fasern kann flexibel auf veränderte Anforderungen reagiert werden und der Compoundierprozess bei Ausnutzung optimaler Faserlängen durchgeführt werden.

Durch Zugabe von weiteren Verstärkungsfasern sowie von für thermoplastische Kunststoffe bekannten Füllstoffen und Additiven können die Materialeigenschaften entsprechend den Erfordernissen des Einsatzgebiets weiter modifiziert werden. Das dargestellte Verfahren eignet sich unter anderem auch sehr gut für die kombinierte

Verstärkung mit Kurzglasfasern und Glasfaserrovings.

Es können folgende Zusammensetzungen eingestellt werden:
- Polymermatrix 99 bis 50 Ma%
- Verstärkungsfaser 1 bis 50 Ma%, vorzugsweise folgende Zusammensetzung:

- Polymermatrix 90 bis 60 Ma%
- Verstärkungsfaser 10 bis 40 Ma%. Mit dem erfindungsgemäßen Verfahren werden bei der Herstellung von natur- und synthesefaserverstärkten Plastifikaten und thermoplastischen Halbzeugen nachstehende Vorteile und Verbesserung erzielt:

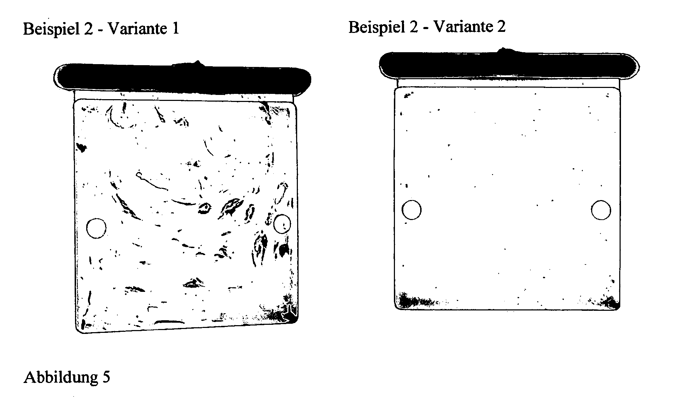

- im Compound werden hohe, genau definierte und gleichmäßige Fasergehalte erreicht,
- die Verstärkungsfasern werden mit hoher Gleichmäßigkeit im Compound verteilt und imprägniert, die Bildung von Faser-agglomeraten und Störstellen wird vermieden (siehe Abbildung 5),
- Bauteile erhalten eine verbesserte Optik und sind auch ohne Beschichtungen im sichtbaren Bereich einsetzbar
   die Fasern liegen mit erhöhter Faserlänge im Compound vor und erzielen dadurch eine verbesserte Verstärkungswirkung,
- das mechanische Eigenschaftsniveau der faserverstärkten Compounds wird deutlich verbessert,
- das Verfahren ist durch geringen Investitionsaufwand für die Anlagenteile und günstige Betriebskosten sehr wirtschaftlich.

### [Beispiele]

Die folgenden zwei Beispiele zeigen vorteilhafte Ausführungsarten mit synthetischen Fasern aus PAN und PET in verschiedenen Aufmachung.

### Beispiel 1

Acrylfaserkabel (PAN) vom Typ Dolanit 10 (Fa. Acordis) mit einer Kabelstärke von 30 ktex, sowie einer Faserfeinheit von 1,5 dtex werden in verschiedenen Aufmachungen (gekräuselt und ungekräuselt) mit Hilfe eines gleichlaufenden Doppelschneckenextrudes ZSK 40 in ein homopolymeres Polypropylen (MFI: 23g/10min, 230°C; 2,16kg) eingearbeitet. Die Anlagenkonfiguration entspricht der Abb.1.

Das Faserkabel, welches üblicherweise in Kartons abgelegt ist, wird durch die Einzugswalzen der Schneidmaschine eingezogen, wobei für gleiche Dosiermengen bei gekräuseltem Kabel eine geringere Walzengeschwindigkeit gegenüber glatten Fasern notwendig ist. Der Transvektor mit 20 mm Innendurchmesser separiert die einzelnen Fasern und führt das Kabel mittels Druckluft zu den Schneidmessern. Die Fasern werden auf eine durchschnittliche Länge von 6 mm geschnitten und mittels Schneckenförderer im Bereich L/D 26 dem Extruder zugeführt. Der Extruder ist mit Schneckenmisch- und Zahnmischelementen entsprechend Abbildung 4 konfiguriert und wird mit Temperaturen im Bereich von 180-200°C gefahren. Um die Faserlänge optimal auszunutzen, wird ein Granulat mit einer Länge von 10 mm erzeugt. Die Materialprüfung erfolgt an Prüfkörpern, die durch Spritzguss hergestellt wurden.

Trotz hoher Fasergehalte sind die Bauteile noch transparent und lassen die gute agglomeratfreie Verteilung der Fasern erkennen. Folgende Tabelle zeigt die erzielten mechanischen Eigenschaften der Compounds bei Fasergehalten von 10 bis 30% im Vergleich zum unverstärkten Polymer.

| Prüfung | Einheit | Norm | | | | | |
|---|---|---|---|---|---|---|---|
| Fasertyp | | | - | Dolanit 10 (1,5dtex / 30ktex) | | | |
| Aufmachung | | | | gekräuselt | | | ungekräuselt |
| Fasergehalt | % | | - | 10 | 20 | 30 | 30 |
| Dichte | g/cm³ | DIN 55990 | 0,9 | 0,92 | 0,95 | 0,98 | 0,97 |
| Zug-E-Modul | MPa | DIN EN ISO 527-1 | 1670 | 1983 | 2364 | 2809 | 2961 |
| Zugfestigkeit | MPa | DIN EN ISO 527-1 | 35 | 45,5 | 55,8 | 61,0 | 60,56 |
| Dehnung bei Zugf. | % | DIN EN ISO 527-1 | 8 | 13,2 | 11,9 | 11,2 | 12,2 |
| Biegemodul | MPa | DIN EN ISO 178 | 1320 | 1813 | 2089 | 2505 | 2393 |
| Norm-Biegespannung | MPa | DIN EN ISO 178 | 33,3 | 42,4 | 46,6 | 52,4 | 51,2 |
| Schlagzähigkeit Charpy | kJ/m² | DIN EN ISO 179/1 | 110 | 61,0 | 72,4 | 90,5 | 84,9 |
| Kerbschlagzähig keit Charpy | kJ/m² | DIN EN ISO 179/1 | 2,5 | 7,0 | 15,3 | 27,2 | 27,0 |

Neben einer deutlichen Erhöhung von Festigkeit und Steifigkeit bei Zug- und Biegebeanspruchung wird ein ausgesprochen schlagzähes Verhalten erzielt. Die Beispiele zeigen, dass durch das beanspruchte Verfahren Verbundwerkstoffe hergestellt werden können, die durch ihr hohes Niveau der mechanischen Eigenschaften eine Alternative zur Glasfaserverstärkung darstellen und sich zusätzlich durch geringeres Gewicht auszeichnen.

### Beispiel 2

Ein Polypropylen Copolymer (MFI: 21g/10min; 230°C; 2,16kg) wird mit hochfesten PET-Fasern verstärkt. Das Beispiel zeigt die Ergebnisse des beanspruchten Verfahrens im Vergleich zur herkömmlichen Technik (Variante 1) mit Einsatz von Kurzfasern (6,6 mm), welche mittels einer Vorrichtung entsprechend DE 19822051 in den Extruder dosiert werden.

Für die beanspruchte Technologie (Variante 2) werden mehrere auf einem Gatter vorgelegte PET-Filamentspulen zu einem Kabel zusammengeführt und entsprechend der Arbeitsweise im Beispiel 1 in Polypropylen eingearbeitet. Die in Abbildung 5 dargestellten Fotos von gespritzten Prüfplatten zeigen, dass die Fasern im mit herkömmlicher Technologie hergestellten Material nur unzureichend aufgelöst sind und die Formkörper eine große Anzahl an Faseragglomeraten enthalten. Im Vergleich dazu kann durch die Erfindung trotz deutlich größerer Ausgangsfaserlängen ein agglomeratfreier Compound hergestellt werden.

Die in nachstehender Tabelle dargestellten Prüfwerte offenbaren, dass durch das erfindungsgemäße Verfahren das Niveau der mechanischen Eigenschaften nochmals deutlich angehoben wird. Neben den verbesserten schlagzähen Eigenschaften wird durch die längeren Verstärkungsfasern und ihrer homogenen Verteilung ein enormer Festigkeitsgewinn erzielt.

| Prüfung | Einheit | | | |
|---|---|---|---|---|
| Variante | | Unverstärktes PP | 1 | 2 |
| Fasertyp | | - | PET - Schnittfaser 6,6 mm (Invista 713) | PET - Filament (Invista 713) |
| Einzelfaserfeinheit | dtex | - | 5,5 | 5,5 |
| Filamentstärke | ktex | - | - | 0,88 |
| Schnittlänge | mm | - | 6,6 | 10 |
| Fasergehalt | % | 0 | 30 | 30 |
| Zug-E-Modul | MPa | 1550 | 1930 | 1967 |
| Zugfestigkeit | MPa | 27 | 27,6 | 46,2 |
| Dehnung bei Zugfestigkeit | % | 5 | 22,4 | 40,6 |
| Schlagzähigkeit Charpy | kJ/m² | k. B.* | 145 | 204 |
| Kerbschlagzähigkeit Charpy | kJ/m² | 6 | 45,6 | 49,6 |

| | | | | |
|---|---|---|---|---|
| * k. B. = kein Bruch | | | | |

### [Bezugszeichenliste]

- 1: Polymerdosierung
- 2: Faserstrang
- 3: Faservorlage
- 4: Wägeeinrichtung
- 5: Schneideinrichtung
- 6: Einzugsvorrichtung
- 7: Gebläse
- 8: Extruder
- 9: Spritzkopf
- 10: Kühlwanne
- 11: Granulator
- 12: Granulat
- 13: Gebläse
- 14: Einzugswalzenpaar
- 15: Faserstrang
- 16: Transvektordüse
- 17: Feststehendes Messer
- 18: Messerrotor
- 19: Luftkanal
- 20: Fallschacht(Trichter) für geschnittene Fasern
- 21: Schneckenzylinder
- 22: Förderschnecken
- 23: Gebläse
- 24: Faserrückhaltesieb
- 25: Einzugszone
- 26: Additivzugabezone
- 27: Faseraufgabezone
- 28: Entgasungszone
- 29: Schneckenförderelemente
- 30: Knetelemente
- 31: Schneckenmischelemente
- 32: Zahnmischelemente

## Patentansprüche

1. Verfahren zur Herstellung von Plastifikaten aus einer thermoplastischen Matrix und Endlosverstärkungsfasern mit Hilfe eines Extruders (8), bei dem endlose Faserstränge (2) aus synthetischen und/oder natürlichen Fasern in Form von Filament, Faserband, -bündel oder -kabel zu Stapelfasern geschnitten werden, diese über einen Schneckenförderer (21) in den Extruder einlaufen und dort mit dem geschmolzenen thermoplastischen Matrixmaterial imprägniert und vermischt werden,
**dadurch gekennzeichnet, dass** die Faserstränge vermittels einer Luftströmung transportiert und geöffnet werden und die mit Hilfe einer Schneidvorrichtung eingekürzten Einzelfasern über den Schneckenförderer mit Ansaugvorrichtung dem Extruder zugeführt werden, wobei der Extruder als Doppelschneckenextruder ausgebildet ist.

2. Verfahren nach Anspruch 1,
**dadurch gekennzeichnet, dass** als Verstärkungsfasern vorzugsweise Acryl-, Polyester-, Polyamid-, cellulosische Chemie-, Flachs-,Hanf-, Sisal- und Jutefasern verwendet werden.

3. Verfahren nach Anspruch 1 und 2,
**dadurch gekennzeichnet, dass** die Faserstränge durch einen Kanal geführt werden, bei dem der durch eine Transvektordüse (16) erzeugte Luftstrom die Fasern transportiert und eine Separierung in Einzelfasern bewirkt.

4. Verfahren nach Anspruch 1 bis 3,
**dadurch gekennzeichnet, dass** die Zuführung des eingekürzten Fasermaterials in den Extruder durch einen seitlichen Doppelschneckenförderer mit gleichlaufenden Konkavschnecken und Ansaugvorrichtung erfolgt.

5. Verfahren nach Anspruch 1 bis 4,
**dadurch gekennzeichnet, dass** durch kontinuierliche Gewichtserfassung der Faservorlage und Steuerung der Drehzahl der Schneidmaschineneinzugswalzen (14) eine Dosiermengenregelung erfolgt.

6. Verfahren nach Anspruch 1 bis 5,
**dadurch gekennzeichnet, dass** der Doppelschneckenextruder ab Faser-Zugabezone (27) in Förderrichtung mit Schneckenförder- (29), Schneckenmisch- (31) und Zahnmischelementen (32) ausgerüstet ist, wodurch ein Optimum an Faserlänge und Dispergierbarkeit der Fasern erreicht wird.

7. Verfahren nach Anspruch 1 bis 6,
**dadurch gekennzeichnet, dass** als thermoplastische Matrix Polyolefine, niedrigschmelzende Polyamide, ABS, TPO, TPE sowie schmelzbare, aus natürlichen Ressourcen gewonnene Polymere verwendet werden.

8. Verfahren nach Anspruch 1 bis 7,
**dadurch gekennzeichnet, dass** als Matrix vorzugsweise Polyolefine mit einem hohen Schmelzindex (MFI bei 230°C; 2,16kg) im Bereich von 20 bis 150 g/10min verwendet werden.

9. Verfahren nach Anspruch 1 bis 8,
**dadurch gekennzeichnet, dass** auch Mischungen aus synthetischen und/oder natürlichen Fasern und gegebenenfalls Glasfasern zur Verstärkung eingesetzt werden.

10. Verfahren nach Anspruch 1 bis 9,
**dadurch gekennzeichnet, dass** folgende Zusammensetzungen eingestellt werden können:
a) Polymermatrix 99 bis 50 Ma%
b) Verstärkungsfaser 1 bis 50 Ma%,
vorzugsweise mit folgender Zusammensetzung:
a) Polymermatrix 90 bis 60 Ma%
b) Verstärkungsfaser 10 bis 40 Ma%.

11. Langfaserverstärkte Compounds, hergestellt nach dem Verfahren nach Anspruch 1 bis 10,
**dadurch gekennzeichnet, dass** die Fasern im Compound in multiaxialer Ausrichtung, gleichmäßiger Verteilung und agglomeratfrei vorliegen und eine mittlere Länge von 1 - 20 mm aufweisen.

12. Langfaserverstärkte Granulate, hergestellt nach dem Verfahren nach Anspruch 1 bis 10,
**gekennzeichnet durch** deren Weiterverarbeitung **durch** Spritzguss, Extrusion oder Pressen.

13. Langfaserverstärkte Plastifikate, hergestellt nach dem Verfahren nach Anspruch 1 bis 10,
**dadurch gekennzeichnet, dass** diese direkt durch Spritzguss, Pressen, Kalandrieren bzw. Thermoformen weiterverarbeitet werden.

14. Verwendung des langfaserverstärkten Compounds, hergestellt nach dem Verfahren nach Anspruch 1 bis 10, für die Inline-Extrusion von Platten, Rohren oder anderen Profilen.

15. Verwendung des langfaserverstärkten Compounds nach Anspruch 11 bis 14, insbesondere für Bauteile im automobilen Innen- und Außenbereich.
